# EUROPEAN PATENT APPLICATION

(11) **EP 4 831 076 A1**
(43) Date of publication of application: **28.10.2026**
(21) Application number: 25171917.5
(22) Date of filing: 23.04.2025
(51) Int. Cl.: B65B 51/04, B65D 45/06, A22C 11/12

(54) **MANUALLY OPERATED CLIPPING APPARATUS**

(71) Applicant: Poly-clip System GmbH & Co. KG, 65795 Hattersheim (DE)
(72) Inventor: Schirmeister, Gregor, 63075 Offenbach (DE)
(74) Representative: Eisenführ Speiser

(57) **Abstract**

The invention relates to a manually operated clipping apparatus (1) comprising: a closing tool arrangement (9), the closing tool arrangement (9) comprising a punch (11) and a die (13), a tool actuator (15) including a hand lever (17) and a toggle lever assembly (19), the toggle lever assembly (19) including a rocker (21) operable by the hand lever (17) and an actuator lever (23) connected to the rocker (21) at a toggle joint (45), wherein the punch (11) is connected to a drive end (47) of the actuator lever (23) opposite the toggle joint (45), and a main support, wherein the punch (11) is reversibly movable along a tool track (57) from a neutral position (53) into an engagement position (55), wherein the main support comprises a support plate (3), and wherein a support portion (41) of the rocker (21) is rotatably supported on the support plate (3).

## Description

The invention relates to a manually operated clipping apparatus for closing a tubular or bag-shaped packaging casing by means of at least one closure clip, the clipping apparatus comprising: a closing tool arrangement for closing the closure clip around a plait-like portion of the packaging casing, the closing tool arrangement comprising a punch and a die, and a tool actuator including a hand lever.

For example, during the production of sausage-shaped products, filling material is fed by a filling machine through a filling tube into a tubular or bag-shaped packaging material, such as a sausage casing. The packaging material is stored on the filling tube and closed at its front end by a closure clip. The tubular casing material is pulled off from the filling tube while being filled. After filing a predetermined amount of filling material into the packaging material, a plait-like portion is formed that is substantially free of filling material and a closure clip is applied to the plait-like portion in order to form a product before filing the next product. Alternatively an entire packaging material is filled and the filled strand of packaging material is then separated into individual products by forming plait-like portions and by applying closure clips to said plait-like portions. While the closing of each filled portion of a packaging casing directly after its filling process is usually used in large scale productions, partitioning of a fully filled packaging casing into individual portions is often used in smaller productions, e.g. in butcher shops. However, both processes are usable in large-scale and small-scale productions.

For large scale production, clipping machines are known which automatically form a plait-like portion and which automatically provide one or more clips. For small producers that produce only limited numbers of products at a time, it is often not economic to buy a highly automated machine. For small producers, manually operated clipping apparatuses are known. These devices are configured for applying a closure clip, in particular a substantially U-shaped closure clip, to the plait-like portion of a packaging. For example, such an apparatus may be a bench-type machine that bends the legs of a closure clip towards each other and around the plait-like portion to close the packaging without damaging the material of the packaging. Such an apparatus typically includes a manually operated handle which engages and drives a punch towards a die for deforming the closure clip around the plait-like portion. In particular, if metal closure clips are used, a considerable amount of force is required to sufficiently deform the closure clip to provide a sealed closure of the packaging casing. With known manually operated clipping apparatuses, producing a larger number of products can be very tiring for an operator as traditional manually operated clipping apparatuses are not ergonomically designed. Furthermore, known manually operated clipping apparatuses still leave room to improve their complexity, reduce manufacturing cost and improve reliability.

It is therefore an object of the present invention to provide a manually operated clipping apparatus that is ergonomic, has a simplified construction, is cost efficient and/or highly reliable.

The present invention solves the above-mentioned problem with a manually operated clipping apparatus as defined in claim 1. In particular, the present invention solves the above-mentioned problem with a manually operated clipping apparatus for closing a tubular or bag-shaped packaging casing by means of at least one closure clip, the clipping apparatus comprising: a closing tool arrangement for closing the closure clip around a plait-like portion of the packaging casing, the closing tool arrangement comprising a punch and a die, and a tool actuator including a hand lever and a toggle lever assembly, the toggle lever assembly including a rocker operable by the hand lever and an actuator lever connected to the rocker at a toggle joint, wherein the punch is connected to a drive end of the actuator lever opposite the toggle joint, and a main support, the main support at least partially defining a tool track, wherein the punch is reversibly movable along the tool track from a neutral position into an engagement position for engaging the die for closing a closure clip, wherein the main support comprises a support plate, and wherein a support portion of the rocker is rotatably supported on the support plate.

The closing tool arrangement comprises at least one punch and at least one die. The punch and the die engage with each other to deform a closure clip around the plait-like portion. The punch and the die are reversibly movable towards and away from each other. Preferably, the die is a fixed die and the punch is reversibly movable towards and away from the fixed die. The tool actuator is configured for moving at least one of the punch and the die of the closing tool arrangement. Preferably, the tool actuator is configured to move the at least one punch.

The punch is reversibly movable along the tool track from a neutral position, in which the punch and the die are disengaged, and an engagement position. In the engagement position the punch and the die are engaged with each other. Preferably, a closure clip provided for closing a packaging can be fully closed when the punch and the die are brought into the engagement position. Preferably, the neutral position and the engagement position form opposite ends of a travel of the punch.

The tool track of the support plate guides the punch at least during a part of its travel from the neutral position to the engaged position. The tool track preferably comprises a lateral clip window for receipt of a closure clip in the tool track. The punch can then move the closure clip at least along a portion of the tool track and towards a closing area. The punch and the die can engage each other in the closing area for closing the closure clip around the plait-like portion. It shall be understood that the punch and the die must not come into contact with each other during their engagement. It is sufficient if the punch and the die engage each other in such a way that a closure clip can be at least partially deformed.

The tool actuator includes a hand lever. The hand lever is configured to be grabbed by a user. The user can then push and/or pull the hand lever to actuate the manually operated clipping apparatus. The tool actuator preferably includes a toggle lever assembly. The toggle lever assembly can be configured to convert a rotational movement of the hand lever into a linear movement of the punch. Moreover, a toggle lever assembly enables ergonomic operation of the clipping apparatus.

The punch is connected to a drive end of an actuator lever of the toggle lever assembly. The drive end of the actuator lever is the end of the actuator lever being connected to the punch. An opposite end of the actuator lever is connected to a toggle joint of the toggle lever assembly. A rocker of the toggle lever assembly is connected to the actuator lever at the toggle joint. The toggle joint preferably allows relative rotation of the actuator lever and the rocker around the toggle joint.

The rocker has a first rocker end connected to the toggle joint and a second rocker end. The rocker is indirectly operable by the hand lever. Preferably, the hand lever is connected to a second rocker end of the rocker. The second rocker end of the rocker is preferably an end of the rocker opposite the first rocker end. A support portion of the rocker is rotatably supported on the support plate of the main support. Preferably, the rocker is configured to pivot around the support portion upon actuation by the hand lever.

The inventor has found that the ergonomics of a manually operated clipping apparatus can be improved significantly by providing a toggle lever assembly having a rocker. A rocker has a support portion and at least two active ends, preferably the first and second rocker ends. Compared to a regular lever that is rotationally supported on one of its ends, a rocker is supported at a support portion spaced apart from its (longitudinal) ends. The rocker allows modification of the kinematics of the tool actuator. The rocker enables a very ergonomic use of the tool actuator. For example and preferably, a lever ratio of a first distance between the first rocker end and the support portion and a second distance between the second rocker end and the support portion can be chosen such that an operating force provided to the hand lever by a user is multiplied and/or such that the hand lever has to be moved by a smaller amount to achieve a similar travel of the punch. By reducing the force required by a user and/or the range of motion a user has to perform for operating the clipping apparatus, the ergonomics of the clipping apparatus can be improved significantly. For rotatably supporting the support portion of the rocker on the support plate, a bearing can be provided. For example, the rocker can be arranged on a pin via a bearing. Preferably, a first rocker leg of the rocker and a second rocker leg of the rocker (or their longitudinal axis respectively) are provided at an angle to each other or non-parallel respectively. For example and preferably, the first rocker leg can be defined along a straight line from the support portion to a force application point at which a force of the hand lever is transferred to the rocker. If the hand lever contacts the rocker along a line, a center of this line is considered the force application point.

According to a first preferred embodiment of the manually operated clipping apparatus, the hand lever is connected to the rocker for operating the rocker. A longitudinal axis of the hand lever preferably bypasses the support portion. A longitudinal axis of the hand lever bypassing the support portion does not extend through the support portion. In this preferred configuration, the hand lever provides leverage around the support portion that is defined by its length and additionally a distance of its longitudinal axis from the support portion. A leverage of the hand lever can be increased and an operating force that has to be provided by an operator can be reduced even further. Operation of the manually operated clipping apparatus is less tiring for the user. Preferably, a distance between the longitudinal axis of the hand lever and the support portion measured orthogonally to the longitudinal axis is 5 cm or larger, preferably 7.5 cm or larger, preferably 10 cm or larger.

Preferably, a length of the hand lever is adjustable. Additionally or alternatively, the hand lever can be exchangeable. For example, a first-hand lever can be exchanged by a second hand lever having a greater length if sausages having a larger calibre are to be produced. By increasing the length of the hand lever or by replacing the hand lever with a longer hand lever, leverage is increased and a force to be provided by the user for operating the clipping apparatus is decreased. The hand lever may be removably attached to the rocker. A fixing mechanism, may be provided for fixing the hand lever to the rocker.

Preferably, the manually operated clipping apparatus further comprises a gathering arrangement for gathering a portion of the packaging casing in a gathering area and for forming the plait-like portion. Providing a gathering arrangement significantly reduces the time required for producing a product. The plait-like portion can be formed with the manually operated clipping apparatus and no longer needs to be formed by hand. The gathering area is an area in that the portion of the tubular or bag-shaped packaging casing is gathered to a plait-like portion. Preferably, the gathering arrangement comprises a gathering wing supported on the support plate. Particularly preferred, the gathering wing is reversibly rotatable from an open position to a closed position. The gathering arrangement can be configured such that a plait-like portion of the packaging casing can be formed by moving the gathering wing from its open position to its closed position. Preferably, the gathering wing is operable via the hand lever simultaneously with the punch. Preferably, the gathering area is surrounded by the gathering wing and the support plate on two opposite sides when the gathering wing is in its closed position.

It shall be understood that a portion supported on the support plate, in particular the support portion of the rocker or a wing support of the gathering wing, must not contact the support plate in order to be supported thereon. It can be sufficient that the respective portion is supported on the support plate via one or more intermediate components, in particular a bolt or screw and one or more bearings.

In a preferred further development, the tool actuator further comprises a wing actuator assembly for moving the gathering wing from the open position to the closed position. Preferably, the wing actuator assembly is operable by the hand lever simultaneously with the toggle lever assembly. In this preferred configuration, the hand lever is operable to gather a portion of the packaging casing into the plait-like portion and to then provide a closure clip to the plait-like portion. Production time for products can be reduced and/or use of the clipping apparatus can be facilitated. It shall be understood that a wing actuator assembly and a toggle lever assembly operable simultaneously by the hand lever can but must not necessarily move at the same time. The simultaneous operation rather specifies that a user can preferably operate both, the wing actuator assembly and the toggle lever assembly, with a single push and/or pull on the hand lever.

In a particularly preferred configuration, at least a section of the tool track for the punch extends through the gathering area. It shall be noted that the tool track can be an open track, in particular a track having one open lateral side, when the gathering wing is in the open position.

Preferably, the tool actuator is configured such that upon operation of the hand lever, the gathering wing reaches the closed position before the punch reaches the gathering area. When the gathering wing is in the closed position before the punch reaches the gathering area, it can be ensured that the plait-like portion is fully formed before the closure clip engages the packaging casing. Preferably, the gathering wing comprises a track portion at least partially defining a portion of the tool track when the gathering wing is in the closed position. The track portion can be a groove in the gathering wing that at least partially defines a portion of the tool track, in particular a portion of the tool track extend through and/or along the gathering area.

According to a preferred embodiment, the tool actuator is configured such that upon operation of the hand lever, the punch moves by 60% or less, preferably 55% or less, preferably 50% or less, preferably 45% or less, preferably 40% or less, preferably 35% or less, of its travel along the tool track before the gathering wing reaches the closed position. In such preferred embodiments, the gathering wing reaches the closed position before the punch arrives at the engagement position. A plait-like portion can be formed by the gathering arrangement before the punch (and if applicable a closure clip that is moved along the tool track by the punch) reaches the gathering area. Damages to the packaging casing can be prevented. The travel of the punch is defined between the neutral position and the engagement position. Preferably, an enclosed portion of the tool track extends along 60% or less, preferably 55% or less, preferably 50% or less, preferably 45% or less, preferably 40% or less, of a length of the tool track. The enclosed portion of the tool track is a portion of the tool track in which the tool and a closure clip received in the tool track are enclosed on two lateral sides, in particular irrespective of the position of the gathering wing. Preferably, the enclosed portion of the tool track is defined entirely by and/or formed in the support plate. Preferably, the punch only moves along the enclosed portion of the tool track before the gathering wing reaches its closed position.

In some preferred embodiments, the wing actuator assembly connects the gathering wing to the toggle joint. The gathering wing is then drivable via the wing actuator assembly which is in turn driven via the toggle joint. In particular, when both the wing actuator and the tool actuator are driven via the toggle joint, the rocker helps to minimise a strain that the manual operation of the clipping apparatus puts on a user. Connection of the wing actuator assembly to the toggle joint ensures that sufficient force for deforming a closure clip can be provided to the punch.

Preferably, the wing actuator assembly comprises a drive pin and a primary lever defining a wing drive contour, wherein the drive pin engages the drive contour for driving the primary lever. The pin can extend through the toggle joint and/or define the toggle joint. The pin is slidably received in the drive contour. Forces provided on the pin can be transferred to the primary lever via the drive contour. The form of the drive contour defines whether the pin slides along the contour and/or whether forces are provided to the primary lever. By providing the preferred arrangement of a drive pin and a primary lever having a wing drive contour, a movement of the primary lever (and ultimately the movement of the gathering wing) can be adapted. The provision of a wing drive contour can thus help to optimize actuation of the gathering assembly and the closing tool arrangement via a single actuator. The wing drive contour can be defined by a groove in the primary lever. The groove can fully or partially extend through the primary lever.

Preferably, the drive pin extends through the toggle joint. The support plate of the manually operated clipping apparatus can comprise a recess. Preferably, the drive pin at least partially extends through the recess. The recess preferably fully extends through the support plate. The drive pin can then extend from one side of the support plate to an opposite second side. In some preferred configurations, the recess in the support plate intersects the tool path. It shall be understood that the intersection of the tool path and the recess can lie in the enclosed portion of the tool path. In particular, if the pin extends through the toggle joint, a collision of the punch and the drive pin at the intersection of the tool path and the recess is impossible, since the punch and the drive pin move simultaneously upon actuation of the hand lever. A recess intersecting the tool path enables a compact design of the manually operated clipping apparatus. In Particular, the support plate can be made smaller, which reduces the overall weight of the clipping apparatus and can facilitate handling thereof.

In a preferred embodiment, at least a portion of the recess is an open recess defined on a lateral side surface of the support plate. An open recess is accessible from the side. A lateral recess is provided on a short side of the support plate or a side of the plate extending in the thickness direction of the support plate respectively. Providing an open recess can facilitate assembly and/or manufacturing of the clipping apparatus and can thus help to reduce overall cost.

Preferably, the recess has a free contour that substantially matches a movement path of the toggle joint between the neutral position and the engagement position of the punch. The free contour does not put limitations on the movement of the toggle joint or does not influence the toggle joints movement path respectively. This prevents the tool actuator and/or the wing actuator assembly from getting stuck during use.

In a preferred embodiment, the wing drive contour has an active contour section and a passive contour section. The wing drive contour is preferably configured such that the pin only drives the primary lever when engaging the active contour section. The shape of the wing drive contour is then chosen such that the primary lever and ultimately also the gathering wing are only moved when the pin engages the active contour section. While the pin engages or slides along the passive contour section the primary lever is not driven. In the preferred further development, the primary lever and the gathering wing connected thereto are stationary while the pin engages the passive contour section. Preferably, the passive contour section of the wing drive contour substantially matches at least a portion of the free contour of the recess in the support plate. Contours matching each other have the same shape. Preferably, the passive section of the wing drive contour overlaps the free contour of the recess when the drive pin engages the passive contour section.

Preferably, a length of the active contour section is 40% or less, preferably 35% or less, preferably 30% or less, preferably 25% or less, of a total length of the wing drive contour. Preferably, the active contour section and the passive contour section are arranged such that upon actuation of the hand lever from a lever neutral position to an actuated position (for closing a closure clip), the pin first engages the active contour section and then the passive contour section. The active contour section therefore forms a first section of the wing drive contour in an actuation direction.

The primary lever is preferably rotatably supported at the support plate. For example, the primary lever can be supported on a pin or bolt extending from the support plate via a bearing.

Preferably, the wing actuator assembly further comprises a secondary lever and a tertiary lever, wherein the secondary lever is connected to the primary lever at a first joint, and wherein the tertiary lever is connected to the secondary lever at a second joint and to the gathering wing at a third joint. Providing a wing actuator assembly with three levers and three joints allows an optimized design that reduces forces required for moving the gathering wing from the neutral position to the closed position. A strain on a user during operation of the clipping apparatus is reduced.

Preferably, the wing actuator assembly and the toggle lever assembly are provided on opposite sides of the support plate. Balance of the clipping apparatus is improved. A compact design can be achieved. Moreover, the wing actuator assembly and the toggle lever assembly are individually accessible such that maintenance of the clipping apparatus is facilitated.

Preferably, the hand lever is provided on a toggle lever side of the support plate. The toggle lever assembly side is the side of the support plate on which the toggle lever assembly is provided. In case the wing actuator assembly is provided on a side of the support plate opposite the toggle lever side, this side of the support plate can be referred to as the wing actuator side. A toggle lever side surface and a wing actuator side surface of the support plate preferably are flat surfaces, preferably flat surfaces parallel to each other. Preferably, both sides of the support plate are free of indentations.

Preferably, a lever ratio of a rocker arm length (of the rocker arm) and an actuator lever arm length (of the actuator lever) lies in a range of 1 to 1.5, preferably 1.1 to 1.4, preferably 1.2 to 1.3. The rocker arm length is measured along a straight line from the support portion to the toggle joint. It shall be understood that a longitudinal axis of the rocker arm can have a kink or can be bent, in particular at the toggle joint. The longitudinal axis of the rocker arm must not extend along a straight line from the toggle joint to a portion connected to the hand lever. The actuator lever arm length is measured along a straight line from the toggle joint to the drive end (i.e. the point where the punch is connected to the actuator lever). The inventor has found that a lever ratio in the defined range is particularly suitable to reduce strain on an operator while manually driving the clipping apparatus.

The manually operated clipping apparatus can further comprise an end stop for limiting a rotational travel of the rocker around the support portion. Preferably, the rocker has a rotational travel of 180° or less, preferably 150° or less, preferably 120° or less. The end stop can be adjustable, preferably adjustable within the preferred range. Preferably, the end stop is provided such that the hand lever has a hand lever orientation angle of at least 30° from a vertical orientation when fully actuated. This can prevent that the hand of a user hits a portion of the clipping apparatus upon full actuation of the hand lever. In the present disclosure, a hand lever extending vertically down is considered to have a hand lever orientation angle of 0° while a hand lever extending horizontally towards a user has a hand lever orientation angle of 90°. Preferably, the hand lever has an actuation range from 180° (vertically up) to 20°, preferably 150° to 30°, preferably 150° to 45°.

In some preferred configurations, the manually operated clipping apparatus comprises at least one return spring for biasing the toggle lever assembly and/or the hand lever and/or the wing actuator assembly towards a neutral position. The return spring preferably is or comprises a torsion spring or leg spring.

Preferably, the support plate is an upright, preferably vertically oriented, support plate. The support plate preferably comprises a clip window. The clip window is preferably provided on a side of the support plate opposite the toggle lever side.

Further comprising a return spring for biasing the tool actuator towards a neutral position, wherein the return spring preferably is or comprises a torsion spring.

Preferably, the support plate comprises a grip section, wherein the grip section is formed by a lateral recess in the support plate. The grip section is preferably provided in a lateral side of the support plate opposite a working side of the support plate. The working side of the support plate is the side on which the closure clips are provided to the packaging casing.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth.

It shall be understood that a preferred embodiment of the present invention can also be any combination of the dependent claims or above embodiments with the respective independent claim.

In the accompanying figures
- Fig. 1: shows a perspective view of a preferred embodiment of a manually operated clipping apparatus in a non-actuated state;
- Fig. 2: shows a view of the manually operated clipping apparatus in a fully actuated state;
- Fig. 3: shows a view of a toggle lever side of the clipping apparatus;
- Fig. 4: shows a view of a wing actuator side of the clipping apparatus; and
- Fig. 5: shows a perspective view of the support plate of the clipping apparatus.

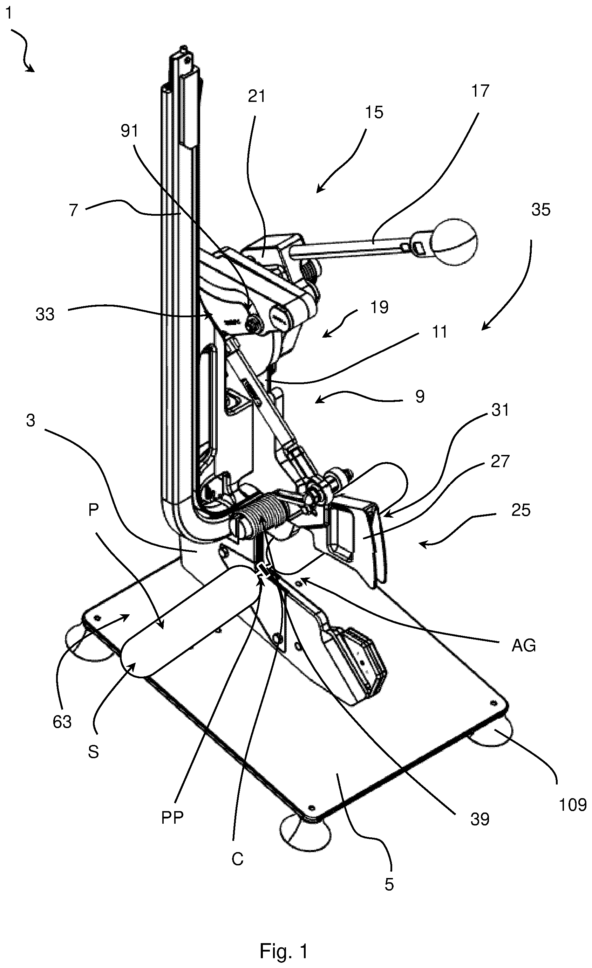

Fig. 1 is a perspective view of a preferred embodiment of the manually operated clipping apparatus 1. The clipping apparatus 1 includes a main support having a generally vertically oriented support plate 3 mounted on a generally horizontal base plate 5. As shown in Fig. 1, the support plate 3 can be a planar plate having two parallel sides. In the preferred embodiment, the two sides are a toggle lever side 7 and a wing actuator side 9 of the support plate 3 and the clipping apparatus 1 respectively. The support plate 3 is preferably formed from steel or an aluminum alloy.

A magazine bar 7 is attached to the support plate 3. The magazine bar 7 is configured to store closure clip C and to provide the closure clip C to a closing tool arrangement 9 of the clipping apparatus 1. The closure clip C provided via the magazine bar 7 can then be closed around a plait-like portion PP of a packaging casing P to form a sausage-shaped product S by the closing tool arrangement 9. It shall be noted that the plait-like portion PP can be pre-formed, for example by hand. In the present embodiment and as described in detail later, the clipping apparatus 1 is instead configured to gather the packaging casing P into a plait-like portion PP.

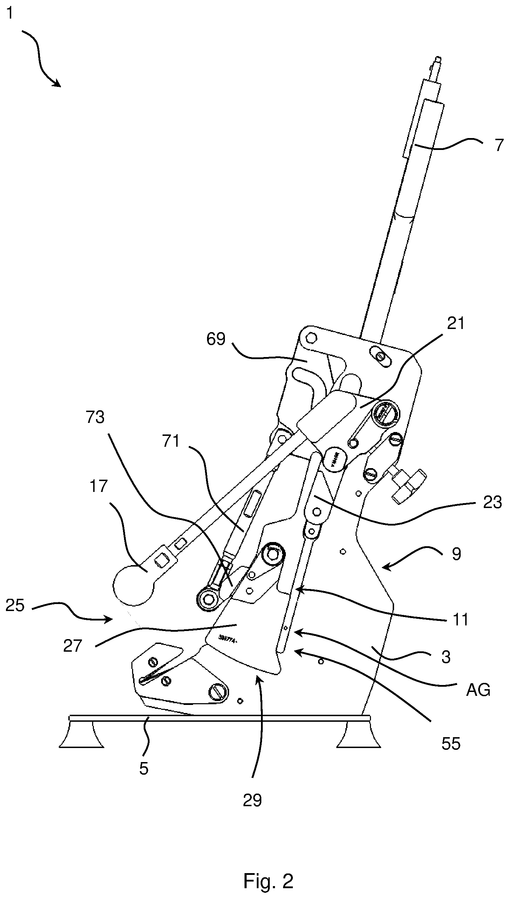

The magazine bar 7 is removably attached to the support plate 3, for example with screws. The magazine bar 7 can be made from steel, aluminum and/or a plastic material. For example, at least a part of the magazine bar 7 can be 3D printed from a plastic material. A connector of such a 3D printed magazine bar 7 for connecting the magazine bar 7 to the support plate 3 can be made from a metal, preferably aluminum. For illustrative purposes, the magazine bar 7 is only shown in Fig. 1 and Fig. 2 but has been omitted in the other figures.

The closing tool arrangement 9 is configured for closing a closure clip C around the plait-like portion PP of the packaging casing P. The closing tool arrangement comprises a punch 11 and a die 13. In Fig. 1, a view of the die 13 is obstructed by the closure clip C and the plait-like portion PP.

For actuating the clipping apparatus 1, a tool actuator 15 including a hand lever 17 is provided. A user of the clipping apparatus 1 can grab the hand lever 17 at a hand grip and pull and/or push on the hand lever 17 in order to drive the closing tool arrangement 9, in particular the punch 11 of the closing tool arrangement 9. The tool actuator 15 further comprises a toggle lever assembly 19 including a rocker 21 and an actuator lever 23, the function of which will be described later.

For gathering a portion of the packaging casing P into a plait-like portion P, the manually operated clipping apparatus 1 comprises a gathering arrangement 25 comprising a gathering wing 27. The gathering wing 27 is configured to gather a portion of the packaging casing P in a gathering area AG. As shown in Fig. 2, the gathering wing 27 and the support plate 3 enclose the gathering area AG when the gathering wing 27 is in a closed position 29. In an open position 31 shown in Fig. 1, the gathering wing 27 is pivoted away such that a closed sausage-shaped product S can be removed and/or a filled packaging casing P can be provided to the gathering area AG.

Here, the gathering wing 27 is supported on the support plate 3. The gathering wing 27 is reversibly rotatable or pivotable respectively between the open position 31 and the closed position 29 and vice versa. For causing rotation of the gathering wing 27, the tool actuator 15 further comprises a wing actuator assembly 33. In the preferred embodiment of the clipping apparatus 1 shown in the figures, the tool actuator 15 is configured to drive both the gathering arrangement 25 and the closing tool arrangement 9. The clipping apparatus 1 therefore allows gathering of a portion of a packaging casing P into a plait-like portion PP and closing the packaging casing P with a closure clip C with a single pull on the hand lever 17. Through this, a production rate achievable with the clipping apparatus 1 compared to the production rate of other manually operated clipping apparatuses that require multiple steps for gathering and closing a packaging casing P can be increased. A functionality of the tool actuator 15, in particular of the toggle lever assembly 19 and the wing actuator assembly 33 will be described in detail below.

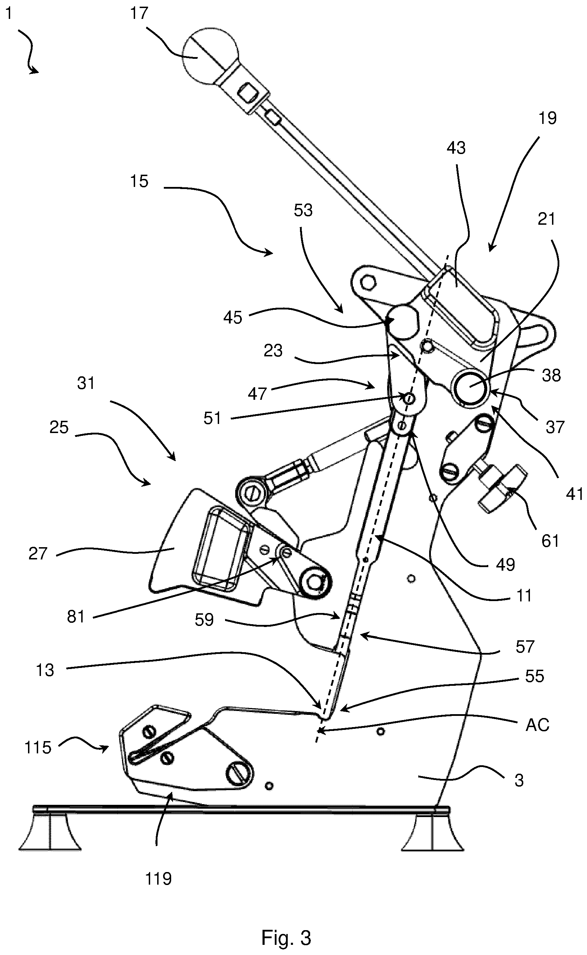

Fig. 3 shows a side view of the manually operated clipping apparatus 1. In particular, Fig. 3 shows a toggle lever side 35 of the clipping apparatus 1 (or the support plate 3 respectively). The toggle lever side 35 is the side of the clipping apparatus 1 on which the toggle lever assembly 19 is provided. Similar to Fig. 1, Fig. 3 shows the clipping apparatus 1 in a neutral or non-actuated state. The hand lever 17 is in a hand lever neutral position. Here, a longitudinal axis of the hand lever 17 extends at a hand lever angle of approximately 135° measured in a clockwise direction.

In the preferred embodiment shown in the figures, the clipping apparatus 1 is configured to automatically return to this non-actuated state. A first return spring 37 of the manually operated clipping apparatus 1 biases the tool actuator 19 into the non-actuated state. As shown in Fig. 3, the first return spring 37 is a leg spring acting on the rocker 21. In the present embodiment and preferably, the clipping apparatus 1 further comprises a second return spring 39 that biases the gathering wing 27 towards its open position 31.

The first return spring 37 is provided around a support bolt 38 extending from the support plate 3. The support bolt 38 rotationally supports a support portion 41 of the rocker 21 on the support plate 3. A bearing (not shown) can be provided between the support bolt 38 and the support portion 41 of the rocker 21 to reduce friction. One leg of the leg spring 37 is attached to the support bolt 38 while another leg is attached to the rocker 21. For example, a leg of the first return spring 37 can be received in a slit in the support bolt 38 (not shown).

The hand lever 17 is fixed to the rocker 21. In particular, the hand lever 17 is partially inserted into a sheath portion 43 of the rocker 21. An actuation force provided by a user on the hand lever 17 can be evenly provided on the rocker 21 via sheath portion 43. Force spikes resulting from high torques and damages to the rocker 21 can be prevented.

Its rotatably (pivotably) supported support portion 41 allows the rocker 21 to rotate (or pivot respectively) about a rotational axis, which is defined by the support bolt 38 in the present embodiment. The rotational axis of the rocker 21 extends perpendicular to the plane of Fig. 3. Preferably, a longitudinal axis of the hand lever 17 does not intersect the rotational axis of the rocker 21. The rocker 21 therefore provides additional leverage that facilitates operation of the tool actuator 19.

Upon actuation of the hand lever 17, the rocker 21 is rotated counter-clockwise about the rotational axis. The rocker 21 and the actuator lever 23 are connected to each other at a toggle joint 45. The toggle joint 45 allows the rocker 21 and the actuator lever 23 to rotate relative to each other about a toggle joint axis which here is perpendicular to the plane shown in Fig. 3. Due to the connection of the rocker 21 and the actuator lever 23 at the toggle joint 45, rotation of the rocker 21 causes movement of the actuator lever 23.

The actuator lever 23 extends from the toggle joint 45 towards a drive end 47 opposite the toggle joint 45. Preferably and as shown in the figures, the punch 11 comprises a punch holder 49 that is connected to the drive end 47 of the actuator lever 23. A punch joint 51 allows rotation of the actuator lever 23 and the punch holder 49 relative to each other. In other embodiments, the punch 11 can be connected to the toggle joint 45 without a punch holder 49. For example, the punch 11 could be provided with pins configured to be connected to the toggle joint.

Preferably, the punch holder 49 is removable connected to the toggle joint 45 and/or the punch 11 is removable connected to the punch holder 49. A removable connection of the punch 11 to the punch holder 49 and/or the punch holder 49 to the toggle joint 45 facilitates replacement of the punch 11, for example if closure clips C of a different size are used and or of the punch 11 is damaged.

By actuation of the hand lever 17, the punch 11 can be driven via the rocker 21 and the actuator lever 23. The punch 11 is reversibly movable from a neutral position 53 shown in Fig. 3 to an engagement position 55 shown in Fig. 2. The engagement position 55 is also marked in Fig. 3 for illustrative purposes. In the engagement position 55, the punch 11 and the die 13 cooperate for closing a closure clip C.

The punch 11 is movable along a tool track 57. The tool track 57 extends from the neutral position 52 to the engagement position 55. The tool track 57 is at least partially defined in the support plate 3 of the main support. As shown in the figures and preferably, at least a portion of the tool track 57 is defined by a groove 59 in the support plate 3, in particular a closed groove 59.

The tool track 57 defines a movement path of the punch 11 and constricts movement of the punch 11 to a movement along a closing axis AC defined by the tool track 57. The toggle lever assembly 19 including the toggle joint 45 and the punch joint 51 allows transformation of a rotational movement of the rocker 21 about its rotational axis into a linear movement of the punch 11.

Preferably, the manually operated clipping apparatus 1 comprises an end stop 61 that limits a rotational travel of the rocker 21 around the rotational axis defined by the support bolt 38. In the present embodiment and preferably, the end stop 61 limits rotational travel of the rocker 21 to about 90°. Preferably, the end stop 61 is adjustable. As shown in Fig. 3, the end stop 61 can comprise a screw that can be screwed into or out of a corresponding threaded hole in an end stop support to adjust the rotational travel of the rocker 21.

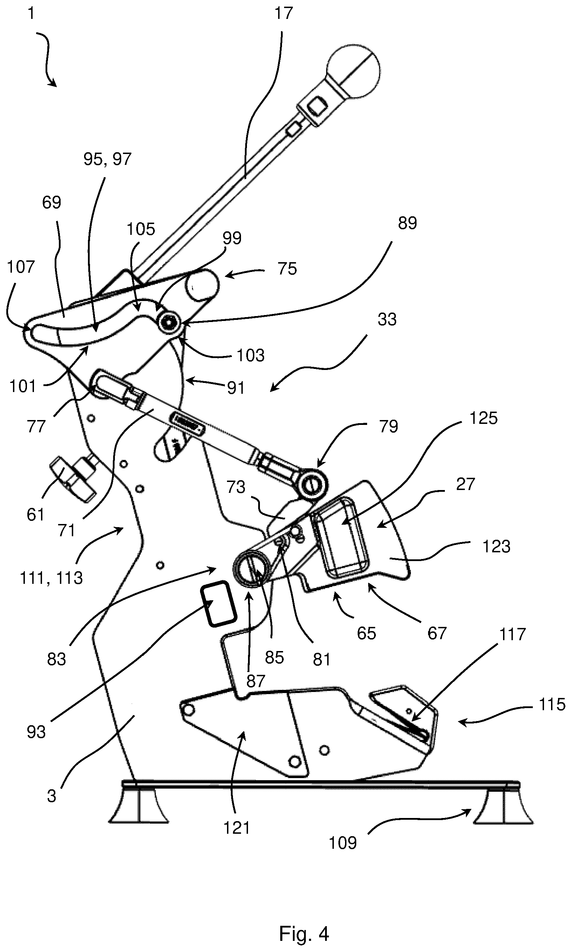

Fig. 4 shows another side view of the manually operated clipping apparatus 1. In particular, Fig. 4 shows an opposite side of the clipping apparatus 1 to that shown in Fig. 3. As the wing actuator assembly 33 is provided on this side, the side shown in Fig. 4 is also referred to as a wing actuator side 63 of the clipping apparatus 1. The wing actuator assembly 33 is configured to effect rotation of the gathering wing 27 from its open position 31 shown in Fig. 4 to the closed position 29 shown in Fig. 2.

On an inner edge 65, the gathering wing 27 comprises a tool groove 67 that partially defines the tool track 57 when the gathering wing 27 is in its closed position 29. This allows the punch 11 and a closure clip C moved by the punch 11 to be supported on both sides along the entire tool track 57. In particular a portion of the tool track 57 in the gathering area AG is at least partially defined by the gathering wing 27.

The wing actuator assembly 33 comprises a primary lever 69, a secondary lever 71 and a tertiary lever 73. The primary lever 69 is rotatably supported on the support plate 3 at a primary lever support 75. As explained in detail below, the primary lever 69 can be pivoted about the primary lever support 75 upon actuation of the hand lever 17. The primary lever 69 and the secondary lever 71 are connected to each other at a first joint 77. The first joint 77 allows rotation of the primary lever 69 and the secondary lever 71 relative to each other about a joint axis. In the preferred embodiment, this joint axis of the first joint 77 extends perpendicular to the plane of Fig. 4 and the support plate 3 respectively. The secondary lever 71 and the tertiary lever 73 are connected in a similar fashion by a second joint 79. A joint axis of the second joint 79 extends parallel to the joint axis of the first joint 77. Opposite the second joint 79, the tertiary lever 73 is connected to the gathering wing 27 via a third joint 81. A joint axis of the third joint 81 is parallel to the respective joint axis of the first joint 77 and the second joint 79.

The gathering wing 27 is rotatably supported on the support plate 3 at a wing support 83. Similar to the arrangement of the rocker 21 at the support plate 3, the gathering wing 27 is supported on a wing support bolt 85 extending from the support plate 3. A bearing may be provided between the wing support bolt 85 and a support portion 87 of the gathering wing 27. In the preferred embodiment shown in the figures, a first leg of the second return spring 39 engages the gathering wing 27 and a second leg of the second return spring 39 is received in a slit in the wing support bolt 85. Upon actuation the gathering wing 27 can be pivoted about a pivot axis defined by the wing support bolt 85. In the present embodiment and preferably, the pivot axis of the gathering wing 27 extends orthogonal to the support plate 3.

In the embodiment shown in the figures and preferably, a movement of the gathering wing 27 from the open position 31 to the closed position 29 is effected as described in the following.

The wing actuator assembly 33 comprises a drive pin 89. The drive pin 89 extends through the toggle joint 45, preferably along a rotational axis of the toggle joint 45. The drive pin 89 is therefore movable by moving the rocker 21 via the hand lever 17. The drive pin 89 extends from the toggle lever side 35 to the wing actuator side 63 through the support plate 3. A recess 91 in the support plate 3 allows movement of the drive pin 89 together with the toggle joint 45. The recess 91 is a partially open recess 91 provided in a lateral side of the support plate 3. The lateral side extends in a thickness direction of the support plate 3 between the wing actuator side 63 and the toggle lever side 35. By forming the recess 91 as an open recess 91, manufacturing of the support plate 3 is facilitated.

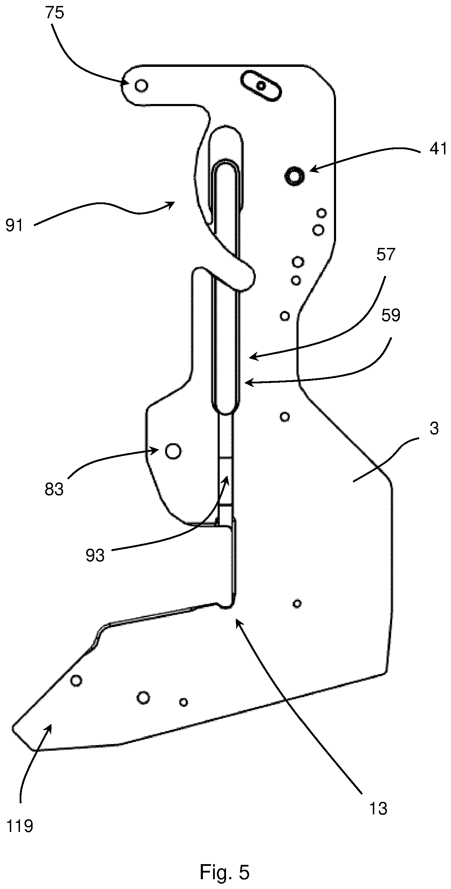

Fig. 5 shows a view of the toggle lever side 35 of the support plate 3. As shown in this view, the recess 91 intersects a portion of the tool track 57 defined by the support plate 3. The intersection of the recess 91 and the tool track 57 allows a compact design of the tool actuator 15. A force required for actuating the clipping apparatus 1 is reduced. Since the recess 91 is provided as an open recess, a compact and stable design of the support plate 3 can be achieved. Fig. 5 also illustrates the locations of the support portion 41 of the rocker 21, the wing support 83 and the primary lever support 75.

The groove 59 defining the tool track 57 only partially extends through the support plate 3 in a thickness direction. A clip window 93 extends from the wing actuator side 63 into the groove 59. The magazine bar 7 is attached to the support plate 3 such that a closure clip C can enter the tool track 57 via the clip window 93 from the wing actuator side 63. The punch 11 can then move the closure clip C along the tool track 57 towards the die 13.

The drive pin 89 extends into a drive contour 95 defined by the primary lever 69. Here, the drive contour 95 is a drive groove 97 provided in the primary lever 69. The drive pin 89 is slidably received in the drive contour 95. A movement of the primary lever 69 upon actuation of the drive pin 89 depends on the shape of the drive contour 95. The drive pin 89 is moved via the hand lever 17, the rocker 21 and the toggle joint 45.

In the present embodiment of the clipping apparatus 1 and preferably, the drive contour 95 has an active contour section 99 and a passive contour section 101. When the clipping apparatus 1 is in the non-actuated state, the drive pin 89 is received in the active contour section 99, preferably on an active end 103 of the drive contour 95. The shape of the drive contour 95 is provided such that movement of the primary lever 69 is only effected while the drive pin 89 is received in and/or slides along the active contour section 99. After passing a transition 105 of the drive contour 95 between the active contour section 99 and the passive contour section 101, further movement of the drive pin 89 no longer results in a movement of the primary lever 69.

Upon movement of the hand lever 17 from a neutral position to a fully actuated position, the drive pin 89 slides from the active end 103 along the active contour section 99, through transition 105, along the passive contour section 101 to a passive end 107 of the drive contour 95. As the primary lever 69 is only pivoted about its rotational axis defined by the primary lever support 75, the gathering wing 27 is also only moved while the drive pin 89 slides along the active contour section 99 of the drive contour 95. In the present embodiment and preferably, the gathering wing 27 performs a full motion from its open position 31 to its closed position 29 while the punch 11 performs only part of its motion from the neutral position 53 to the engagement position 55. Preferably, the punch moves by 50% or less of its travel along the tool track 57 from the neutral position 53 to the engagement position 55 before the gathering wing 27 reaches its closed position 29. Preferably, the punch 11 is still entirely received in a portion of the tool track 57 defined in the support plate 3 when the gathering wing 27 reaches its closed position 29. Preferably, the tool actuator 15 is configured such that upon actuation of the hand lever 27, the punch 11 does not enter the gathering area AG before the gathering wing 27 reaches its closed position 29. Damages to a not yet fully gathered packaging casing P by the punch 11 or a closure clip C moved by the punch 11 can be prevented.

In the preferred embodiment of the manually operated clipping apparatus 1 shown in the figures, movement of the drive pin 89 from the active end 103 of the drive contour 95 to the transition 95 causes a rotation of the primary lever 69 around the rotational axis defined by the primary lever support 75 until the passive contour section 101 of the drive contour 95 aligns with the recess 91. After the primary lever 69 has assumed this position, further movement of the drive pin 89 and the toggle joint 45 along the recess 91 does not effect additional rotation of the primary lever 69.

During movement of the drive pin 89 along the active contour section 99, the primary lever 69 is pivoted. The pivoting motion of the primary lever 69 rotates the first joint 77 and the secondary lever 71 connected thereto around the rotational axis defined by the primary lever support 75. Upon actuation of the hand lever 17, the primary lever 69 moves the secondary lever 71. The secondary lever 71 then moves the tertiary lever 73 via the second joint 79. Since the tertiary lever 73 and the gathering wing 27 are connected to each other at the third joint 81, movement of the tertiary lever 73 is transferred into a pivoting motion of the gathering wing 27 about the rotational axis defined by the support bolt 85. The wing actuator assembly 33 thus transfers an actuation force provided by the drive pin 89 to the gathering wing 27 for moving the gathering wing 27 from the open position 31 to the closed position 29.

The secondary lever 71 of the wing actuator assembly 33 is adjustable in length. This facilitates assembly of the wing actuator assembly 33. Moreover, a wing actuator lever ratio can be adjusted. The wing actuator lever ratio is defined by a length of the tertiary lever 73 along its longitudinal axis between the second joint 79 and the third joint 81 divided by a length of the secondary lever 71 along its longitudinal axis between the first joint 77 and the second joint 79. In the embodiment shown in the figures, the wing actuator lever ratio has a value of about 0.28. Preferred are wing actuator lever ratios of 0.05 to 0.5, preferably 0.1 to 0.5, preferably 0.1 to 0.4, preferably 0.1 to 0.35, preferably 0.15 to 0.35, preferably 0.15 to 0.3, preferably 0.2 to 0.3. Preferably, a length of the secondary lever 71 is adjustable by ± 15mm. Preferably, a length of the tertiary lever 73 is adjustable by ± 10mm.

In the present embodiment and preferably, the manually operated clipping apparatus 1 is configured as a bench-top clipping apparatus configured to be positioned on a work bench or work table. Feet 109 are provided on an underside of the base plate 5. The feet 109 can be made of a material that allows the clipping apparatus 1 to stand securely even in wet conditions. For example, the feet 109 can comprise or can be made of a rubber material.

During or after production of sausage-shaped products S, the clipping apparatus 1 may have to be removed from the work bench or the work table for cleaning and/or to make room for other tools, devices or the like. To facilitate handling, the manually operated clipping apparatus 1 comprises a grip section 111. The grip section 111 is positioned such that a user can securely grip the clipping apparatus 1. In the present embodiment and preferably, the grip section 111 is formed as a grip recess 113 in the support plate 3. Preferably, the grip recess 113 is a recessed portion of the support plate 3 extending substantially in a depth direction (from back to front) perpendicular to a height direction (from the base plate 5 up) of the clipping apparatus 1 and perpendicular to a thickness direction of the support plate 3. For a substantially vertically extending support plate 3, the grip recess 113 extends in a horizontal direction. Preferably, the grip recess 113 extends from a backside of the clipping apparatus towards an opposite front side. The front side is a side of the clipping apparatus 1 from which the gathering area AG is accessible when the gathering wing 27 is in its open position 31.

Preferably, the manually operated clipping apparatus 1 comprises a cutting assembly 115. The cutting assembly 115 is configured for cutting the plait-like portion PP of the packaging casing P. After closing the packaging casing P with a closure clip C, the finished sausage-shaped product S can be separated from the rest of the packaging casing P by cutting the plait-like portion PP with the cutting assembly 115. In the present embodiment and preferably, the cutting assembly 115 is removably attached on the support plate 3. A removable attachment of the cutting assembly 115 allows easy replacement of the cutting assembly 115 or parts thereof. For example, the cutting assembly 115 can comprises at least one cutting blade 117. The cutting blade 117 may be removed for sharpening and/or replacement. Here the cutting assembly 115 has a hook shape with the cutting blade 117 being positioned within the hook shape. A risk of injury for a user is reduced, since the cutting blade 117 is not exposed to the outside. Preferably and as shown in the figures, the cutting assembly 115 is provided on a front extension 119 of the support plate 3. The front extension 119 extends towards the user such that the cutting assembly 115 is easily accessible during use of the clipping apparatus 1.

Preferably, the die 13 is removably held on the clipping apparatus 1, in particular on the support plate 3. It is then possible to replace a damaged die 13 or to provide another type of die 13, for example, if closure clips C of a different size or shape are used. As shown in Fig. 4, the manually operated clipping apparatus 1 can comprise a removable die holder plate 121 that secures the die 13 to the support plate 3. In the preferred embodiment, the die holder plate 121 is attached to the support plate 3 with screws and/or from the wing actuator side 63.

In the embodiment shown in the figures and preferably, the gathering wing 27 has a multi-part construction. The end of the tertiary lever 73 connected to the gathering wing 27 at the third joint 81 is sandwiched between two wing plates 123 of the gathering wing 27. Sandwiching of the tertiary lever 73 between the wing plates 123 prevents uneven loads on the gathering wing 27 and/or excessive torques on the support portion 87 of the gathering wing 27. Preferably, each wing plate 123 is provided with an indentation 125. The indentations 125 can abut each other to facilitate assembly of the gathering wing 27. Additionally or alternatively, the indentations 125 can be provided to reduce an overall weight of the gathering wing 27. A force required for moving the gathering wing 27 can be reduced. Operation of the manually operated clipping apparatus 1 can be less tiring for a user.

### List of reference signs

- 1: manually operated clipping apparatus
- 3: support plate
- 5: base plate
- 7: magazine bar
- 9: closing tool arrangement
- 11: punch
- 13: die
- 15: tool actuator
- 17: hand lever
- 19: toggle lever assembly
- 21: rocker
- 23: actuator lever
- 25: gathering arrangement
- 27: gathering wing
- 29: closed position of gathering wing
- 31: open position of gathering wing
- 33: wing actuator assembly
- 35: toggle lever side
- 37: first return spring
- 38: support bolt
- 39: second return spring
- 41: support portion
- 43: sheath portion
- 45: toggle joint
- 47: drive end of actuator lever
- 49: punch holder
- 51: punch joint
- 53: neutral position of punch
- 55: engagement position of punch
- 57: tool track
- 59: groove
- 61: end stop
- 63: wing actuator side
- 65: inner edge
- 67: tool grove
- 69: primary lever
- 71: secondary lever
- 73: tertiary lever
- 75: primary lever support
- 77: first joint of wing actuator assembly
- 79: second joint of wing actuator assembly
- 81: third joint of wing actuator assembly
- 83: wing support
- 85: support bolt
- 87: support potion of gathering wing
- 89: drive pin
- 91: recess
- 93: clip window
- 95: drive contour
- 97: drive groove
- 99: active contour section of drive contour
- 101: passive contour section of drive contour
- 103: active end of drive contour
- 105: transition between active contour section and passive contour section
- 107: passive end of drive contour
- 109: feet
- 111: grip section
- 113: grip recess
- 115: cutting assembly
- 117: cutting blade
- 119: front extension of support plate
- 121: die holder plate
- 123: wing plates
- 125: indentation
- AC: closing axis
- AG: gathering area
- C: closure clip
- P: packaging casing
- PP: plait-like portion
- S: sausage-shaped product

## Claims

1. A manually operated clipping apparatus (1) for closing a tubular or bag-shaped packaging casing (P) by means of at least one closure clip (C), the clipping apparatus (1) comprising:
a closing tool arrangement (9) for closing the closure clip around a plait-like portion (PP) of the packaging casing (P), the closing tool arrangement (9) comprising a punch (11) and a die (13),
a tool actuator (15) including a hand lever (17) and a toggle lever assembly (19), the toggle lever assembly (19) including a rocker (21) operable by the hand lever (17) and an actuator lever (23) connected to the rocker (21) at a toggle joint (45), wherein the punch (11) is connected to a drive end (47) of the actuator lever (23) opposite the toggle joint (45), and
a main support, the main support at least partially defining a tool track (57), wherein the punch (11) is reversibly movable along the tool track (57) from a neutral position (53) into an engagement position (55) for engaging the die (13) for closing a closure clip (C),
wherein the main support comprises a support plate (3), and
wherein a support portion (41) of the rocker (21) is rotatably supported on the support plate (3).

2. The manually operated clipping apparatus (1) of claim 1,
wherein the hand lever (17) is connected to the rocker (21) for operating the rocker (21), and
wherein a longitudinal axis of the hand lever (17) bypasses the support portion (41).

3. The manually operated clipping apparatus (1) of claim 1 or 2,
further comprising a gathering arrangement (25) for gathering a portion of the packaging casing (P) in a gathering area (AG) and for forming the plait-like portion (PP),
the gathering arrangement (25) comprising a gathering wing (27) supported on the support plate (3), wherein the gathering wing (27) is reversibly rotatable from a open position (31) to a closed position (29).

4. The manually operated clipping apparatus (1) of claim 3, wherein the tool actuator (15) further comprises a wing actuator assembly (33) for moving the gathering wing (27) from the open position (31) to the closed position (29), wherein the wing actuator assembly (33) is operable by the hand lever (17) simultaneously with the toggle lever assembly (19).

5. The manually operated clipping apparatus (1) of claim 4, wherein at least a section of the tool track (57) for the punch (11) extends through the gathering area (AG), wherein the tool actuator (15) is configured such that upon operation of the hand lever (17), the gathering wing (27) reaches the closed position (29) before the punch (11) reaches the gathering area (AG),
and/or wherein the tool actuator (15) is configured such that upon operation of the hand lever (17), the punch (11) moves by 50% or less of its travel along the tool track (57) before the gathering wing (27) reaches the closed position (29).

6. The manually operated clipping apparatus (1) of any of claims 4 or 5, wherein the wing actuator assembly (33) connects the gathering wing (27) to the toggle joint (45).

7. The manually operated clipping apparatus (1) of any of claims 4 to 6, wherein the wing actuator assembly (33) comprises a drive pin (89) and a primary lever (69) defining a wing drive contour (95),
wherein the drive pin (89) engages the drive contour (95) for driving the primary lever (69).

8. The manually operated clipping apparatus (1) of claims 6 and 7, wherein the drive pin (89) extends through the toggle joint (45).

9. The manually operated clipping apparatus (1) of claim 8, wherein the support plate (3) comprises a recess (91), and wherein the drive pin (89) at least partially extends through the recess (91).

10. The manually operated clipping apparatus (1) of claim 9, wherein the recess (91) in the support plate (3) intersects the tool track (57),
and/or wherein the recess (91) is an open recess defined on a lateral side surface of the support plate (3),
and/or wherein the recess (91) has a free contour that substantially matches a movement path of the toggle joint (45) between the neutral position (53) and the engagement position (55) of the punch (11).

11. The manually operated clipping apparatus (1) of any of claims 7 to 10, wherein the wing drive contour (95) has an active contour section (99) and a passive contour section (101),
wherein the wing drive contour (95) is configured such that the drive pin (89) only drives the primary lever (69) when engaging the active contour section (99), and
wherein a length of the active contour section (99) preferably is 30% or less of a total length of the wing drive contour (95).

12. The manually operated clipping apparatus (1) of any of claims 7 to 11,
wherein the wing actuator assembly (33) further comprises a secondary lever (71) and a tertiary lever (73),
wherein the secondary lever (71) is connected to the primary lever (69) at a first joint (77), and
wherein the tertiary lever (73) is connected to the secondary lever (71) at a second joint (79) and to the gathering wing (27) at a third joint (91).

13. The manually operated clipping apparatus (1) of any of claims 4 to 12, wherein the wing actuator assembly (33) and the toggle lever assembly (19) are provided on opposite sides of the support plate (3).

14. The manually operated clipping apparatus (1) of any of the previous claims, wherein a lever ratio of a rocker arm length and an actuator lever arm length lies in a range of 1 to 1.5, preferably 1.1 to 1.4, preferably 1.2 to 1.3.

15. The manually operated clipping apparatus (1) of any of the previous claims, further comprising a return spring (37, 39) for biasing the toggle lever assembly (19) and/or the hand lever (17) towards a neutral position, wherein the return spring (37, 39) preferably is a torsion spring.

## Amended claims

### Amended claims in accordance with Rule 137(2) EPC.

1. A manually operated clipping apparatus (1) for closing a tubular or bag-shaped packaging casing (P) by means of at least one closure clip (C), the clipping apparatus (1) comprising:
a closing tool arrangement (9) for closing the closure clip around a plait-like portion (PP) of the packaging casing (P), the closing tool arrangement (9) comprising a punch (11) and a die (13),
a tool actuator (15) including a hand lever (17) and a toggle lever assembly (19), the toggle lever assembly (19) including a rocker (21) operable by the hand lever (17) and an actuator lever (23) connected to the rocker (21) at a toggle joint (45), wherein the punch (11) is connected to a drive end (47) of the actuator lever (23) opposite the toggle joint (45), and
a main support, the main support at least partially defining a tool track (57), wherein the punch (11) is reversibly movable along the tool track (57) from a neutral position (53) into an engagement position (55) for engaging the die (13) for closing a closure clip (C),
wherein the main support comprises a support plate (3), and
wherein a support portion (41) of the rocker (21) is rotatably supported on the support plate (3),
wherein the hand lever (17) is connected to the rocker (21) for operating the rocker (21), and
wherein a longitudinal axis of the hand lever (17) bypasses the support portion (41).

2. The manually operated clipping apparatus (1) of claim 1,
further comprising a gathering arrangement (25) for gathering a portion of the packaging casing (P) in a gathering area (AG) and for forming the plait-like portion (PP),
the gathering arrangement (25) comprising a gathering wing (27) supported on the support plate (3), wherein the gathering wing (27) is reversibly rotatable from a open position (31) to a closed position (29).

3. The manually operated clipping apparatus (1) of claim 2, wherein the tool actuator (15) further comprises a wing actuator assembly (33) for moving the gathering wing (27) from the open position (31) to the closed position (29), wherein the wing actuator assembly (33) is operable by the hand lever (17) simultaneously with the toggle lever assembly (19).

4. The manually operated clipping apparatus (1) of claim 3, wherein at least a section of the tool track (57) for the punch (11) extends through the gathering area (AG), wherein the tool actuator (15) is configured such that upon operation of the hand lever (17), the gathering wing (27) reaches the closed position (29) before the punch (11) reaches the gathering area (AG),
and/or wherein the tool actuator (15) is configured such that upon operation of the hand lever (17), the punch (11) moves by 50% or less of its travel along the tool track (57) before the gathering wing (27) reaches the closed position (29).

5. The manually operated clipping apparatus (1) of any of claims 3 or 4, wherein the wing actuator assembly (33) connects the gathering wing (27) to the toggle joint (45).

6. The manually operated clipping apparatus (1) of any of claims 3 to 5, wherein the wing actuator assembly (33) comprises a drive pin (89) and a primary lever (69) defining a wing drive contour (95),
wherein the drive pin (89) engages the drive contour (95) for driving the primary lever (69).

7. The manually operated clipping apparatus (1) of claims 5 and 6, wherein the drive pin (89) extends through the toggle joint (45).

8. The manually operated clipping apparatus (1) of claim 7, wherein the support plate (3) comprises a recess (91), and wherein the drive pin (89) at least partially extends through the recess (91).

9. The manually operated clipping apparatus (1) of claim 8, wherein the recess (91) in the support plate (3) intersects the tool track (57),
and/or wherein the recess (91) is an open recess defined on a lateral side surface of the support plate (3),
and/or wherein the recess (91) has a free contour that substantially matches a movement path of the toggle joint (45) between the neutral position (53) and the engagement position (55) of the punch (11).

10. The manually operated clipping apparatus (1) of any of claims 6 to 9, wherein the wing drive contour (95) has an active contour section (99) and a passive contour section (101),
wherein the wing drive contour (95) is configured such that the drive pin (89) only drives the primary lever (69) when engaging the active contour section (99), and
wherein a length of the active contour section (99) preferably is 30% or less of a total length of the wing drive contour (95).

11. The manually operated clipping apparatus (1) of any of claims 6 to10,
wherein the wing actuator assembly (33) further comprises a secondary lever (71) and a tertiary lever (73),
wherein the secondary lever (71) is connected to the primary lever (69) at a first joint (77), and
wherein the tertiary lever (73) is connected to the secondary lever (71) at a second joint (79) and to the gathering wing (27) at a third joint (91).

12. The manually operated clipping apparatus (1) of any of claims 3 to 11, wherein the wing actuator assembly (33) and the toggle lever assembly (19) are provided on opposite sides of the support plate (3).

13. The manually operated clipping apparatus (1) of any of the previous claims, wherein a lever ratio of a rocker arm length and an actuator lever arm length lies in a range of 1 to 1.5, preferably 1.1 to 1.4, preferably 1.2 to 1.3.

14. The manually operated clipping apparatus (1) of any of the previous claims, further comprising a return spring (37, 39) for biasing the toggle lever assembly (19) and/or the hand lever (17) towards a neutral position, wherein the return spring (37, 39) preferably is a torsion spring.

15. The manually operated clipping apparatus (1) of any of the previous claims, wherein the support plate (3) comprises a grip section (111), wherein the grip section (111) is formed by a lateral recess (113) in the support plate (3).
